# EUROPEAN PATENT SPECIFICATION

(11) **EP 3 538 490 B1**
(45) Date of publication and mention of the grant of the patent: **02.03.2022**
(21) Application number: 17784982.5
(22) Date of filing: 24.10.2017
(51) Int. Cl.: C01D 15/02

(54) **PROCESS FOR MAKING ANHYDROUS LITHIUM HYDROXIDE**
VERFAHREN ZUR HERSTELLUNG VON WASSERFREIEM LITHIUMHYDROXID
PROCÉDÉ DE FABRICATION D'HYDROXYDE DE LITHIUM ANHYDRE

(30) Priority: 10.11.2016 EP 16198165
(43) Date of publication of application: 18.09.2019
(73) Proprietor: BASF SE, 67056 Ludwigshafen am Rhein (DE)
(72) Inventor: KALO, Benedikt, 67056 Ludwigshafen (DE); HEILEK, Joerg, 67056 Ludwigshafen (DE); PICHLMAIR, Stefan, Iselin, New Jersey 08830 (US)
(74) Representative: BASF IP Association
(86) International application number: PCT/EP2017/077072
(87) International publication number: WO 2018/086862

(56) References cited:
- JP-A- 2006 265 023
- US-A- 2 395 842
- US-A- 3 607 040
- US-A1- 2005 069 484

## Description

The present invention is directed towards a process for making anhydrous lithium hydroxide, said process comprising the step of removing water from particulate LiOH hydrate by subjecting said LiOH hydrate to a stream of gas with a temperature in the range of from 150 to 500°C and wherein the average residence time of the LiOH is in the range of from 0.5 to 20 seconds.

Lithium salts are versatile components for many reactions. Some of them, for example lithium carbonate Li₂CO₃ and lithium hydroxide LiOH, are used as lithium source for cathode active materials of lithium ion batteries. They may be converted with hydroxides of transition metals such as cobalt hydroxide, manganese hydroxide or nickel hydroxide or - even more frequently - with mixed hydroxides of cobalt, nickel and manganese to the respective lithiated transition metal oxides.

Each Li₂CO₃ and LiOH have their drawbacks, though. During calcining, Li₂CO₃ releases carbon dioxide. Any residual carbon dioxide - or residual carbonate - in cathode active materials is undesirable because it may lead to gassing in the battery. In addition, the use of Li₂CO₃ implies that about 60% by weight of the lithium source are lost during calcination. Lithium hydroxide releases water during calcination which is uncritical. Only about 38% by weight of the lithium source are lost. However, LiOH is usually supplied as hydrate, for example as LiOH·H₂O. However, depending on aging of such hydrate of LiOH and due to its hygroscopicity, the water content of lithium hydroxide may vary, and due to its ability to remove carbon dioxide from air the lithium content of any commercially available "lithium hydroxide" needs to be determined individually in case an accurate metering of lithium is desired.

For producing cathode active materials, though, an accurate metering of lithium is important. Therefore, it is desired to provide a method for removing hydrate water from lithium hydroxide in order to be able to provide stoichiometric LiOH.

Various ways for large scale anhydrous LiOH production have been described. In JP-A 2011-178584, a batch process under vacuum is disclosed. It requires a residence time of at least two hours that limits the space velocity. In JP-A 2006-265023, a process is disclosed in which the hydrate of lithium hydroxide is dehydrated in a rotary kiln. Due to the highly corrosive properties of LiOH the process disclosed leads to a strong abrasion in the kiln and consequently to impurities in the LiOH that are undesired.

It was an objective of the present invention to provide a process for making anhydrous lithium hydroxide that overcomes the above drawbacks.

Accordingly, the process as defined at the outset has been found, hereinafter also referred to as inventive process or process according to the present invention. The inventive process comprises the step of said process comprising the step of removing water from particulate LiOH hydrate by subjecting said LiOH hydrate to a stream of gas with a temperature in the range of from 150 to 500°C, preferred are 300 to 450°C.

LiOH hydrate in the context of the present invention does not only refer to lithium hydroxide monohydrate LiOH·H₂O but also to materials that contain less or more water such as partly dehydrated monohydrate or moist lithium hydroxide monohydrate. The upper limit of water content is determined by the phase change from solid to liquid. Preferably, the average formula is LiOH·x H₂O with x being in the range of from 0.8 to 1.2. even more preferred is stoichiometric LiOH·H₂O.

The term "particulate" in the context of LiOH hydrate refers to a material with an average particle diameter (D50) in the range of from 100 nm to 5 mm, preferably 1 µm to 1 mm and even more preferably 3 µm to 200 µm.

Such material may be obtained by breaking up commercially available LiOH hydrate, for example by milling. Non-limiting examples of suitable mills are air classifier mills, jet mills, pin mills, and rotor-stator mills.

Said particulate material is subjected to a stream of gas. The gas may have a temperature in the range of from 150 to 500°C, preferably 250 up to 400°C. The gas temperature is determined at the beginning of the reaction zone and may decrease in the course of the reaction. Preferably, temperatures of 453°C or more are not reached on the particle surface of the LiOH·H₂O or LiOH, respectively. Such high temperatures may be avoided by carrying out the present invention for short residence times, see below.

The formation of lithium carbonate and lithium hydrogen carbonate during the inventive process is not desirable. In a preferred embodiment of the present invention, the stream of gas to which particulate LiOH hydrate is subjected has a carbon dioxide content in the range of from 0.01 to 500 ppm by weight, preferred are 0.1 to 50 ppm by weight. The CO₂ content may be determined by, e.g., optical methods using infrared light. It is even more preferred to use a stream of gas with a carbon dioxide below detection limit for example with infrared-light based optical methods.

The gas used for the gas stream may be selected from air, oxygen, oxygen-enriched air, oxygen-depleted air, nitrogen, rare gasses such as argon, mixtures from argon and air or from argon and nitrogen, and pre-treated. Preferred are nitrogen, air and pre-treated air. In the context of the present invention, the term "pre-treated air" refers to air with a carbon dioxide content of 0.01 to 500 ppm. Preferred is a carbon dioxide content in the range of from 0.1 to 50 ppm by weight. It is even more preferred to use a stream of gas with a carbon dioxide below detection limit for example with infrared-light based optical methods.

In many embodiments, the gas used for the gas stream to be contacted with LiOH hydrate will usually contain water vapor. Typically, the water vapor partial pressure is in the range of from 1 to 50,000 Pa, preferred from 500 to 30,000 Pa, even more preferred from 4,000 to 20,000 Pa.

The average residence time of the LiOH is in the range of from 0.5 to 20 seconds, preferably from 0.5 up to 10 seconds. The average residence time refers to the average time that the LiOH
- as such or as LiOH·H₂O - spends in the stream of gas. Preferably, the average residence time is defined by the time period during which the LiOH particles - as such or as LiOH·H₂O particles
- are airborne and conveyed by the gas stream (from initial dispersion after powder dosage to the removal from the gas stream.

The inventive process may be carried out in various way. It is possible to carry out the inventive process in a fluidized bed, especially in a spouted bed. In the course of the removal of water, larger particles break up to smaller particles, for example with an average diameter in the range of from 1 to 20 µm, preferably 2 to 10 µm and more preferably from 4 to 7 µm, and they are removed pneumatically from the reaction vessel. After such removal, they are collected in a device for removing dust from off-gas, for example an electrostatic dust precipitator, to a cyclone, or to gas-solid filter units, for example a baghouse filter, especially a fabric baghouse filter.

In a preferred embodiment, the inventive process is carried out as flash dehydration. Such flash dehydration is performed in a tubular reactor or pipe that may be installed vertically or horizontally or in an installation combining both a horizontally and vertically installed pipe. Preferred is a horizontally installed pipe. The stream of gas moves the LiOH hydrate along the tubular reactor or pipe. During such pneumatic transport, larger particles - if present - may break up to smaller particles, for example with an average diameter in the range of from 1 to 20 µm, preferably 2 to 10 µm and more preferably from 4 to 7 µm.

In one embodiment of the present invention the inventive process is carried out with conductive heating, for example to wall temperatures of 200 to 350°C. If the walls are too hot LiOH may melt and cause clogging. If the walls are too cold water may condense, and product will react back to form hydrate. Heating is required because the removal of water in the inventive process is endothermic.

At the end of the reaction, the anhydrous LiOH so obtained may be recovered and cooled to ambient temperature under inert gas, for example nitrogen or air with a carbon dioxide content of 0.01 to 500 ppm. In a preferred embodiment, the gas stream may be cooled by mixing it with additional gas at lower temperature level, before entering a dust precipitator or cyclone filter, for example a baghouse filter. Recovery of the LiOH from the gas stream may be performed in a dust precipitator or a cyclone preferred is a cyclone or a baghouse filter. Subsequently, water may be condensed by directly or indirectly cooling the gas stream. After having removed the water at least partially the gas may be re-used in the inventive process.

Anhydrous LiOH obtained according to the inventive process may have a residual water content of 0.01 to 1 % by weight, determined by weight loss at 150°C under CO₂-free air for three hours. The CO₂ content was checked by optical measurements based upon infrared light.

The invention is further illustrated by the following working example. Nm³/h are m³/h at normal conditions - that is one atmosphere and 25°C.

The example was carried out in an electrically heated tubular reactor, diameter 150 mm. The average temperature of the reactor wall was 300°C. The distance from the point where LiOH·H₂O was added to a quenching unit was 8.1 m. For the gas stream, air with a CO₂ content of 30 to 50 ppm was used. The inlet temperature of the gas upstream of the LiOH·H₂O feed point was 400°C. Downstream of the quenching unit was a dust precipitator in the form of a fabric baghouse filter.

Downstream of the gas inlet, an amount of 5 kg/h of LiOH hydrate with n average particle diameter of 140 µm (D50) was added with a rotary valve. About 125 Nm³/h of gas were used.

This resulted in an average residence time of LiOH in the tubular reactor of two seconds.

For recovering the anhydrous LiOH a fabric baghouse filter was used that was cooled by addition of air of ambient temperature. Collected solids were removed through pulse jet cleaning of the bags.

The LiOH so obtained was checked for loss upon drying, that was the weight loss at 150°C under CO₂-free air for three hours. The loss upon drying was 0.23 % by weight. The LiOH·H₂O had a loss upon drying of 42.68% by weight under the same conditions for measuring.

## Claims

1. Process for making anhydrous lithium hydroxide, comprising the step of removing water from particulate LiOH hydrate by subjecting said LiOH hydrate to a stream of gas with a temperature in the range of from 150 to 500°C wherein the average residence time of the LiOH is in the range of from 0.5 to 20 seconds.

2. Process according to claim 1 wherein the step of subjecting LiOH hydrate to a stream of gas with a temperature in the range of from 150 to 500°C is performed in a horizontally installed tubular reactor.

3. Process according to claim 1 or 2 wherein LiOH hydrate has an average particle diameter (D50) in the range of from 100 µm to 1 mm.

4. Process according to any of the preceding claims wherein the gas stream is nitrogen, air or air with a carbon dioxide content in the range of from 0.1 to 500 ppm by weight.

5. Process according to any of the preceding claims wherein the gas stream has a velocity sufficient to pneumatically transport the LiOH hydrate and the anhydrous lithium hydroxide through the reactor.

6. Process according to any of the preceding claims wherein the gas stream contains 0.1 to 500 ppm by weight CO₂.

7. Process according to any of the preceding claims wherein the average residence time of the LiOH is in the range of from 0.5 to 10 seconds.

8. Process according to any of the preceding claims wherein the stream of gas has a temperature in the range of from 300 to 450°C.

## Patentansprüche

1. Verfahren zur Herstellung von wasserfreiem Lithiumhydroxid, umfassend den Schritt des Entfernens von Wasser aus teilchenförmigem LiOH-Hydrat, indem man das LiOH-Hydrat einem Gasstrom mit einer Temperatur im Bereich von 150 bis 500 °C aussetzt, wobei die durchschnittliche Verweilzeit des LiOH im Bereich von 0,5 bis 20 Sekunden liegt.

2. Verfahren nach Anspruch 1, wobei man den Schritt, bei dem man LiOH-Hydrat einem Gasstrom mit einer Temperatur im Bereich von 150 bis 500 °C aussetzt, in einem horizontal installierten Rohrreaktor durchführt.

3. Verfahren nach Anspruch 1 oder 2, wobei das LiOH-Hydrat einen durchschnittlichen Teilchendurchmesser (D50) im Bereich von 100 µm bis 1 mm aufweist.

4. Verfahren nach einem der vorhergehenden Ansprüche, wobei es sich bei dem Gasstrom um Stickstoff, Luft oder Luft mit einem Kohlendioxidgehalt im Bereich von 0,1 bis 500 Gewichts-ppm aufweist.

5. Verfahren nach einem der vorhergehenden Ansprüche, wobei der Gasstrom eine Geschwindigkeit aufweist, die zum pneumatischen Transport des LiOH-Hydrats und des wasserfreien Lithiumhydroxids durch den Reaktor ausreichend ist.

6. Verfahren nach einem der vorhergehenden Ansprüche, wobei der Gasstrom 0,1 bis 500 Gewichts-ppm CO₂ aufweist.

7. Verfahren nach einem der vorhergehenden Ansprüche, wobei die durchschnittliche Verweilzeit des LiOH im Bereich von 0,5 bis 10 Sekunden liegt.

8. Verfahren nach einem der vorhergehenden Ansprüche, wobei der Gasstrom eine Temperatur im Bereich von 300 bis 450 °C aufweist.

## Revendications

1. Procédé pour la préparation d'hydroxyde de lithium anhydre, comprenant l'étape d'élimination d'eau d'hydrate de LiOH particulaire en soumettant ledit hydrate de LiOH à un flux de gaz doté d'une température dans la plage allant de 150 à 500 °C, le temps de séjour moyen du LiOH étant dans la plage allant de 0,5 à 20 secondes.

2. Procédé selon la revendication 1, l'étape de soumission d'hydrate de LiOH à un flux de gaz doté d'une température dans la plage allant de 150 à 500 °C étant réalisée dans un réacteur tubulaire installé horizontalement.

3. Procédé selon la revendication 1 ou 2, l'hydrate de LiOH possédant un diamètre moyen de particule (D50) dans la plage allant de 100 µm à 1 mm.

4. Procédé selon l'une quelconque des revendications précédentes, le flux de gaz étant de l'azote, de l'air ou de l'air comportant une teneur en dioxyde de carbone dans la plage allant de 0,1 à 500 ppm en poids.

5. Procédé selon l'une quelconque des revendications précédentes, le flux de gaz possédant une vitesse suffisante pour transporter de manière pneumatique l'hydrate de LiOH et l'hydroxyde de lithium anhydre à travers le réacteur.

6. Procédé selon l'une quelconque des revendications précédentes, le flux de gaz contenant de 0,1 à 500 ppm en poids de CO₂.

7. Procédé selon l'une quelconque des revendications précédentes, le temps de résidence moyen du LiOH étant dans la plage allant de 0,5 à 10 secondes.

8. Procédé selon l'une quelconque des revendications précédentes, le flux de gaz possédant une température dans la plage allant de 300 à 450 °C.
